# EUROPÄISCHE PATENTSCHRIFT

(11) **EP 2 491 349 B1**
(45) Veröffentlichungstag und Bekanntmachung des Hinweises auf die Patenterteilung: **11.12.2013**
(21) Anmeldenummer: 10770746.5
(22) Anmeldetag: 01.10.2010
(51) Int. Cl.: G01D 3/08

(54) **VERFAHREN UND ANORDNUNG ZUR MESSDATENERFASSUNG MIT ÜBERPRÜFEN DER VERKABELUNG**
METHOD AND ASSEMBLY FOR DETECTING MEASUREMENT DATA WITH INSPECTION OF THE CABLING
PROCÉDÉ ET DISPOSITIF PERMETTANT DE CAPTER DES DONNÉES DE MESURE AVEC VÉRIFICATION DU CÂBLAGE

(30) Priorität: 22.10.2009 AT 66709 U
(43) Veröffentlichungstag der Anmeldung: 29.08.2012
(73) Patentinhaber: AVL List GmbH, 8020 Graz (AT)
(72) Erfinder: MAYRHOFER, Norbert, A-8010 Graz (AT); MOIK, Josef, A-8047 Graz (AT); TEICHMANN, Rüdiger, A-8075 Hart. b. Graz (AT)
(74) Vertreter: Weiss, Christian
(86) Internationale Anmeldenummer: PCT/EP2010/064636
(87) Internationale Veröffentlichungsnummer: WO 2011/047946

(56) Entgegenhaltungen:
- EP-A2- 0 324 067
- DE-A1- 19 540 858

## Beschreibung

Die gegenständliche Erfindung betrifft ein Verfahren zum Überprüfen der Verkabelung in einer Anordnung zur Messdatenerfassung und eine Anordnung zur Messdatenerfassung, wobei von einer Anzahl von Messsensoren über Messsensorleitungen jeweils ein Messsensorsignal an einen Messverstärker gesendet wird und die Messverstärker über Messsignalleitungen jeweils ein Messsignal an eine Messdatenauswerteeinheit senden.

In Prüfsystemen von Fahrzeugen bzw. Fahrzeugkomponenten, wie z.B. ein Rollenprüfstand für Fahrzeuge oder ein Prüfstand für Motoren, Antriebsstränge, Getriebe, etc., werden eine Reihe von Messsignalen erfasst und in übergeordneten Einheiten, wie z.B. einer Prüfstandssoftware, verarbeitet. In solchen Anordnungen zur Messdatenerfassung besteht die Messkette in der Regel aus mehreren Messsensoren, wie z.B. piezoelektrische oder resistive Drucksensoren, Sensoren für Schwingung, Kraft, Drehmoment, Temperatur, Abgasanalyse, etc., die jeweils mit einem Messverstärker verbunden sind. Die einzelnen Messverstärker sind dabei mit einer Messdatenauswerteeinheit verbunden.

In der auf Prüfständen, insbesondere auf Motorprüfständen, häufig eingesetzten Indiziertechnik, werden alle erwünschten Motorkennwerte - darunter werden Kennwerte und Parameter des zu prüfenden Verbrennungsmotors (z.B. Diesel- oder Ottomotor), bzw. seines Betriebsverhaltens (z.B. während eines Arbeitszyklus) verstanden - erfasst bzw. aus Messwerten berechnet. Zur Indizieranordnung gehört auch ein Signalverstärker (Messverstärker), der ein Sensorsignal für eine weitere Verwendung entsprechend weiterverarbeitet; z.B. verstärkt, konditioniert, filtert und/oder digitalisiert. Bei gewissen Sensoren, wie z.B. den für die Indiziertechnik besonders wichtigen piezoelektrischen Zylinderdruckaufnehmern, wird als Signalverstärker im Allgemeinen ein Ladungsverstärker verwendet. Es können aber auch z.B. Dehnungsmessstreifen, piezoresisitive Druckaufnehmer, Körperschall-Klopfsensoren, Sensoren für die Schall- und Ultraschallemissionsanalyse, Ionenstromsonden, Flammlichtsensoren, Sensoren für Nadelhub, Ventilhub oder Kolbenhub, etc., mit den je zugehörigen Signalverstärkern verwendet werden. Je nach Art der Sensoren können die verschiedenen bekannten Signalverstärkerschaltungen zum Einsatz kommen. Für piezoelektrische Sensoren, die uA zur Messung von Druck, Kraft, Drehmoment, und Beschleunigung eingesetzt werden, hat sich das Prinzip des Ladungsverstärkers (im engeren Sinn) gegenüber Elektrometerverstärkern und Transimpedanzverstärkern (z.B. Spannungs-Strom- bzw. Ladungs-Strom-Konverter) weitgehend durchgesetzt. Auch für Ladungsverstärker im engeren Sinn sind verschiedene Schaltungen bekannt geworden. In einem nachgeschalteten Indiziergerät, d.h. einem Gerät mit winkel- oder zeitbasierter Triggerung der einzelnen Messzeitpunkte, werden dann die von den Signalverstärkern gelieferten Messsignale weiterverarbeitet.

Als Messverstärker kommen dabei auch häufig mehrkanalige Geräte zum Einsatz, wobei in jedem Messkanal ein eigener Signalverstärker vorgesehen ist. Jeder einzelne Kanal wird dabei für die nachfolgende Beschreibung der Erfindung als einzelner Messverstärker angesehen.

In Anordnungen mit vielen Sensoren, wie es auf Prüfständen in der Regel anzutreffen ist, ist es durchaus eine Schwierigkeit diese Fülle an Sensoren, Verstärkern, Indiziergeräten, etc. zu verwalten und sicherzustellen, dass die Konfiguration (Sensor, Verkabelung, etc.) der einzelnen Messketten und der gesamten Anordnung zur Messdatenerfassung fehlerfrei ist, da es ansonsten zu fehlerhaften Messungen oder Messausfällen, etc. kommen kann. In einer Anordnung zur Messdatenerfassung ist zwischen den einzelnen Messsensoren und Messverstärkern und zwischen den einzelnen Messverstärkern und Messdatenauswerteeinheit eine entsprechende Verkabelung notwendig. Durch die notwendige manuell vorzunehmende Verkabelung, eröffnen sich aber eine Vielzahl von möglichen Fehlerquellen, z.B. durch ein fehlendes Kabel, ein defektes Kabel oder durch eine Verwechslung einzelner Kabel, also einem Fehlanschluss. Solche auf die Kabel zurückzuführende Fehler sind darüber hinaus, vor allem in einer Anordnung mit vielen Sensoren, äußerst schwer zu finden. Um ein hohes Maß an Automatisierung und eine damit verbundene Fehlerreduktion zu erreichen, ist es wünschenswert, wenn die Konfiguration der Messanordnung zu einem hohen Maß selbsttätig erkannt und auch verifiziert werden kann. Dazu gibt es auch entsprechende Software um die Konfiguration der Messanordnung zu verwalten und zu dokumentieren. Eventuelle Fehler in der Verkabelung lassen sich aber mit einer solchen Verwaltungssoftware ohne weitere Maßnahmen nicht erkennen.

Es wurde dazu bereits vorgeschlagen, am Sensor oder im Stecker des Sensorkabels eine Speichereinheit vorzusehen, in der bestimmte, den Sensor betreffende Daten, wie z.B. Kalibrierdaten, gespeichert werden und von einer Auswerteeinhejt abgefragt werden können. Eine solche Anordnung wird z.B. in der EP 1 302 755 B1 oder EP 0 324 067 A2 offenbart. Ebenso ist es aus der EP 1 300 657 A2 bereits bekannt im Sensor nur eine Sensorkennung zu hinterlegen und die sensorrelevanten Daten in einer dem Sensor zugeordneten Speichereinheit zu hinterlegen, von wo die sensorrelevanten Daten nach Identifizierung der Sensors über die abzufragende Sensorkennung abgefragt werden können. Damit konnte zwar der Sensor identifiziert werden und über die sensorrelevanten Daten eine Parametrierung der Konfiguration, z.B. des Verstärkers, vorgenommen werden, die Verkabelung zwischen den Komponenten der Messanordnung, insbesondere zwischen den Messverstärkern und der Messdatenauswerteeinheit, kann damit aber nicht überprüft werden.

Es ist daher eine Aufgabe der gegenständlichen Erfindung, eine Anordnung und ein Verfahren zur Messdatenerfassung anzugeben, mit der die Verkabelung zwischen Messverstärkern und Messdatenauswerteeinheit einfach und selbsttätig auf Fehler hin überprüft werden kann, mit entsprechender damit verbundener Erhöhung der Betriebssicherheit, Verkürzung von Fehlersuchzeiten und Vereinfachung der Bedienung.

Diese Aufgabe wird erfindungsgemäß dadurch gelöst, dass die Messdatenauswerteeinheit über eine Abfrageleitung ein Abfragesignal an die Messverstärker sendet und die Messverstärker als Antwort auf das Abfragesignal über die zu überprüfenden Messsignalleitungen ein Antwortsignal an die Messdatenauswerteeinheit senden. Durch diese Rückmeldung der Messverstärker an die Messdatenauswerteeinheit über die Messsignalleitungen kann überprüft werden, ob die Verkabelung zwischen diesen beiden Komponenten fehlerhaft ist. Damit kann auch eine vorgegebene Konfiguration selbsttätig, einfach und rasch überprüft werden oder eine bestehende Konfiguration erfasst werden.

In einer besonders einfachen Ausgestaltung der Erfindung senden die Messverstärker ihr Antwortsignal gleichzeitig. Damit wird für einen mehrkanaligen Verstärker nur eine Abfrageleitung benötigt und die Erkennung einer fehlerhaften Verkabelung kann auf zumindest einen (mehrkanaligen) Messverstärker mit zugehöriger Messdatenauswerteeinheit eingeschränkt werden, was für eine rasche Fehleranalyse schon ausreichen kann.

Um eine ganze Konfiguration überprüfen zu können oder um die genaue Fehlerstelle feststellen zu können, kann auch vorgesehen sein, dass die Messverstärker von der Messdatenauswerteeinheit sequentiell abgefragt werden. Alternativ dazu kann jeder Messverstärker über eine eigene ihm zugeordnete Kennung auch einzeln abgefragt werden.

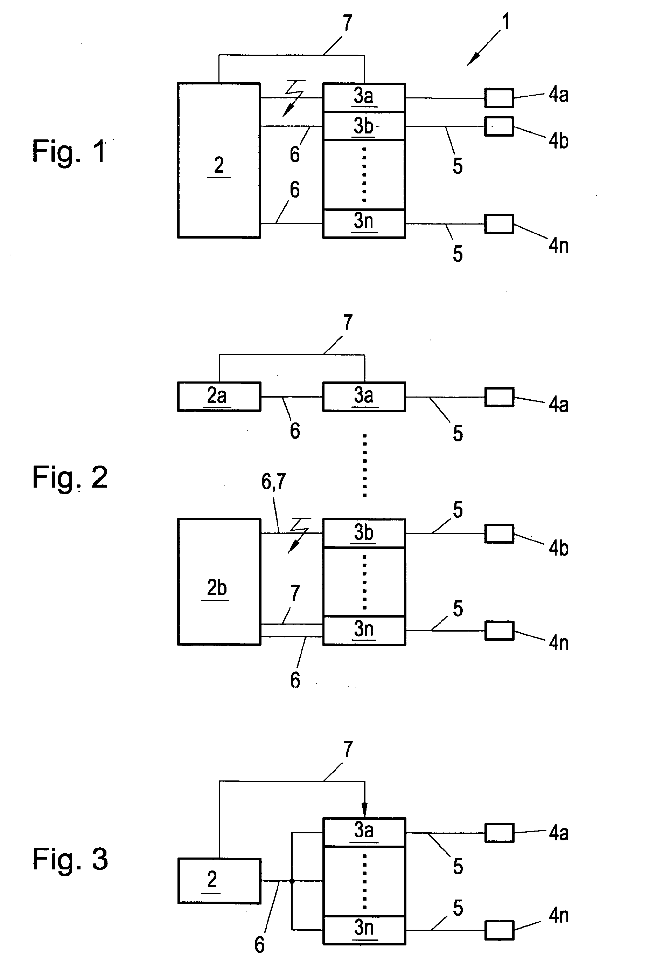

Die gegenständliche Erfindung wird nachfolgend anhand der schematischen, beispielhaften und nicht einschränkenden und vorteilhafte Anordnungen von Messdatenerfassungen zeigenden Figuren 1 bis 3 beschrieben.

Eine erfindungsgemäße Anordnung 1 zur Messdatenerfassung umfasst mehrere (zumindest einen) Messsensor 4a - 4n, die jeweils über Messsensorleitungen 5 mit einem geeigneten Messverstärker 3a - 3n verbunden sind. Die Messverstärker 3 können dabei in einem mehrkanaligen Gerät, als ein Gerät mit mehreren Anschlüssen für Messsensoren 4, wie in Fig. 1 dargestellt, angeordnet sein oder ein Messverstärker 3 kann auch ein separates Gerät sein, wie in Fig. 2 angedeutet. Für die Erfindung hat diese Unterscheidung allerdings keine Bedeutung.

Die Messverstärker 3 sind über Messsignalleitungen 6 mit einer Messdatenauswerteeinheit 2, wie z.B. einem Indiziergerät oder einer Prüfstandssteuerung, verbunden. Dabei kann wiederum jeder Messverstärker 3 mit einer eigenen Messdatenauswerteeinheit 2 oder einem Eingang einer mehrkanaligen Messdatenauswerteinheit 2 verbunden sein, womit eine parallele Verarbeitung von Messsignalen möglich ist. Alternativ können auch mehrere Messverstärker 3 mit einer einzigen Messdatenauswerteeinheit 2 oder einem einzigen Eingang einer Messdatenauswerteeinheit 2 verbunden sein, wenn eine serielle Verarbeitung von Messsignalen ausreichend ist, wie z.B. in Fig. 3 angedeutet.

Jeder Messverstärker 3 ist weiters mit einer Abfrageleitung 7 verbunden. Dabei kann für einen mehrkanaligen Messverstärker 3 auch nur eine einzige Abfrageleitung 7 vorgesehen sein, wie in Fig. 1 dargestellt, es kann aber auch für jeden einzelnen Messverstärker 3 eine eigene Abfrageleitung 7 vorgesehen sein oder es ist auch denkbar, die Abfrageleitung 7 und die Messsignalleitung 6 zusammenzulegen, wie in Fig. 2 angedeutet.

Um eine fehlerhafte Verkabelung zwischen Messverstärker 3 und Messdatenauswerteeinheit 2, also eine fehlerhafte Messsignalleitung 6, zu erkennen, wird nun von der Messdatenauswerteeinheit 2 über die Abfrageleitung 7 ein Abfragesignal, z.B. ein bestimmter Impuls, oder ein codierter Befehl, z.B. als Impulsfolge oder in einer digitalen Datenübertragung, oder als Signal einer bestimmten Frequenz, etc., an den Messverstärker 3 gesendet. Der Messverstärker 3 erkennt diesen codierten Befehl und sendet in Folge über die Messsignalleitungen 6 ein entsprechendes Antwortsignal, z.B. wieder als Impuls, Impulsfolge oder in einer digitalen Datenübertragung, oder als Signal einer bestimmten Frequenz, etc. Das Antwortsignal ist dabei vorteilhaft unterschiedlich zu den Messsignalen, um eine einfache Erkennung in der Messdatenauswerteeinheit 2 zu ermöglichen. Kommt an einem Eingang der Messdatenauswerteeinheit 2 kein Antwortsignal an, so kann davon ausgegangen werden, dass die Verkabelung zwischen dem Eingang der Messdatenauswerteeinheit 2 und dem zugehörigen Messverstärker 3, z.B. zwischen dem Messverstärker 3a und der Messdatenauswerteeinheit 2 wie in Fig. 1 angedeutet, fehlerhaft bzw. nicht vorhanden ist, z.B. durch ein fehlerhaftes Kabel oder durch ein nicht oder schlecht gestecktes Kabel. So kann ein möglicher Verkabelungsfehler auf eine kleine Einheit, wie z.B. eine Messdatenauswerteeinheit 2 oder einem mehrkanaligen Messverstärker 3 oder im Idealfall auf einen bestimmten Messverstärker 3, eingegrenzt werden.

Um eine vorgegebene Konfiguration zu überprüfen, kann auch vorgesehen werden, dass jeder einzelne Messverstärker 3 einzeln angesprochen werden kann. Dazu kann jeder Messverstärker 3 eine eigene Identifikation haben oder die Messverstärker 3 werden sequentiell abgefragt. Jeder Messverstärker 3 sendet daraufhin sein Antwortsignal. Kommt am vorgesehenen Eingang der Messdatenauswerteeinheit 2, z.B. laut gespeicherter Konfiguration, kein Antwortsignal oder an einem falschen Eingang ein Antwortsignal an, so kann ein Verkabelungsfehler oder ein fehlerhaftes Kabel vorliegen. Auf diese Weise kann eine Konfiguration einer Messanordnung, oder ein Teil einer solchen Konfiguration, auch selbsttätig überprüft werden.

Wird die Messsignalleitung 6 gleichzeitig als Abfragleitung 7 verwendet, so ist es vorteilhaft, das Abfragesignal bzw. das Antwortsignal und das Messsignal in unterschiedlichen Frequenzbändern zu versenden. Das Abfragesignal bzw. das Antwortsignal kann dabei eine deutlich höhere Frequenz aufweisen, z.B. einige Zehnerpotenzen höher, als ein reguläres Messsignal. Damit kann sehr einfach zwischen Abfragesignal bzw. Antwortsignal und Messsignal unterschieden werden.

Durch die Auswertung der Signalqualität des Antwortsignals kann auch die Verbindungsqualität überprüft werden, was auch eine Diagnose der Verkabelung zulässt.

Weiters kann durch das erfindungsgemäße Verfahren auch eine bestehende Verkabelung selbstständig erfasst werden. Dazu werden z.B. die Messverstärker 3 einzeln abgefragt und überprüft auf welchem Kanal der Messdatenauswerteeinheit 2 eine Antwort zurückkommt. So kann die Konfiguration erfasst werden und z.B. einer Verwaltungssoftware übergeben werden.

Auch kann das Bedienpersonal bei der Verkabelung unterstützt werden, z.B. indem während der Verkabelung laufend überprüft wird, ob die gesteckten Kabel auch der vorgesehenen Konfiguration entsprechen.

## Patentansprüche

1. Verfahren zum Überprüfen der Verkabelung in einer Anordnung zur Messdatenerfassung, wobei von einer Anzahl von Messsensoren (4) über Messsensorleitungen (5) jeweils ein Messsensorsignal an einen Messverstärker (3) gesendet wird und die Messverstärker (3) über Messsignalleitungen (6) jeweils ein Messsignal an eine Messdatenauswerteeinheit (2) senden, **dadurch gekennzeichnet, dass** die Messdatenauswerteeinheit (2) über eine Abfrageleitung (7) ein Abfragesignal an die Messverstärker (3) sendet und die Messverstärker (3) als Antwort auf das Abfragesignal über die Messsignalleitungen (6) ein Antwortsignal an die Messdatenauswerteeinheit (2) senden.

2. Verfahren nach Anspruch 1, **dadurch gekennzeichnet, dass** die Messverstärker (3) gleichzeitig ihr Antwortsignal senden.

3. Verfahren nach Anspruch 1, **dadurch gekennzeichnet, dass** die Messverstärker (3) von der Messdatenauswerteeinheit (2) sequentiell abgefragt werden.

4. Verfahren nach Anspruch 1, **dadurch gekennzeichnet, dass** die Messverstärker (3) von der Messdatenauswerteeinheit (2) über eine Kennung der Messverstärker (3) einzeln abgefragt werden.

5. Anordnung zur Messdatenerfassung mit einer Anzahl von Messsensoren (4), die über Messsensorleitungen (5) jeweils mit einem Messverstärker (3) verbunden sind und mit einer Messdatenauswerteeinheit (2), die über Messsignalleitungen (6) mit den Messverstärkern (3) verbunden ist, **dadurch gekennzeichnet, dass** jeder Messverstärker (3) über eine Abfrageleitung (7) mit der Messdatenauswerteeinheit (2) verbunden ist und die Messdatenauswerteeinheit (2) zum Senden eines Abfragesignals an die Messverstärker (3) vorgesehen ist und **dass** die Messverstärker (3) bei Erhalt des Abfragesignals zum Senden eines Antwortsignals über die Messsignalleitungen (6) vorgesehen sind.

6. Anordnung nach Anspruch 5, **dadurch gekennzeichnet, dass** die Messsignalleitung (6) gleichzeitig als Abfrageleitung (7) vorgesehen ist.

## Claims

1. Method for checking the cabling in an assembly for detecting measurement data, wherein a number of measuring sensors (4) each send a measuring sensor signal to a measuring amplifier (3) via measuring sensor lines (5), and the measuring amplifiers (3) each send a measuring signal to a measurement data evaluation unit (2) via measuring signal lines (6), **characterized in that** the measurement data evaluation unit (2) sends a query signal to the measuring amplifiers (3) via a query line (7), and the measuring amplifiers (3) send a response signal to the measurement data evaluation unit (2) via the measuring signal lines (6) as a response to the query signal.

2. Method according to Claim 1, **characterized in that** the measuring amplifiers (3) simultaneously send their response signal.

3. Method according to Claim 1, **characterized in that** the measuring amplifiers (3) are sequentially queried by the measurement data evaluation unit (2).

4. Method according to Claim 1, **characterized in that** the measuring amplifiers (3) are individually queried by the measurement data evaluation unit (2) via an identifier of the measuring amplifiers (3).

5. Assembly for detecting measurement data, having a number of measuring sensors (4) which are each connected to a measuring amplifier (3) via measuring sensor lines (5), and having a measurement data evaluation unit (2) which is connected to the measuring amplifiers (3) via measuring signal lines (6), **characterized in that** each measuring amplifier (3) is connected to the measurement data evaluation unit (2) via a query line (7), and the measurement data evaluation unit (2) is provided for sending a query signal to the measuring amplifiers (3), and **characterized in that** the measuring amplifiers (3) are provided for sending a response signal via the measuring signal lines (6) upon receipt of the query signal.

6. Assembly according to Claim 5, **characterized in that** the measuring signal line (6) is simultaneously provided as a query line (7).

## Revendications

1. Procédé pour contrôler le câblage dans un dispositif pour la saisie de données de mesure, dans lequel un signal de capteur de mesure est envoyé par chacun d'un nombre de capteurs de mesure (4) à un amplificateur de mesure (3) par des lignes (5) de capteurs de mesure et les amplificateurs de mesure (3) envoient chacun un signal de mesure à une unité (2) d'analyse de données de mesure par des lignes (6) de signaux de mesure, **caractérisé par le fait que** l'unité (2) d'analyse de données de mesure envoie un signal d'interrogation aux amplificateurs de mesure (3) par une ligne d'interrogation (7) et les amplificateurs de mesure (3) envoient un signal de réponse à l'unité (2) d'analyse de données de mesure par les lignes (6) de signaux de mesure en tant que réponse au signal d'interrogation.

2. Procédé selon la revendication 1, **caractérisé par le fait que** les amplificateurs de mesure (3) envoient leur signal de réponse en même temps.

3. Procédé selon la revendication 1, **caractérisé par le fait que** les amplificateurs de mesure (3) sont interrogés en séquence par l'unité (2) d'analyse de données de mesure.

4. Procédé selon la revendication 1, **caractérisé par le fait que** les amplificateurs de mesure (3) sont interrogés individuellement par l'unité (2) d'analyse de données de mesure par appel de l'indicatif des amplificateurs de mesure (3).

5. Dispositif pour la saisie de données de mesure, comportant un nombre de capteurs de mesure (4) qui sont reliés chacun à un amplificateur de mesure (3) par des lignes (5) de capteurs de mesure, et une unité (2) d'analyse de données de mesure qui est connectée aux amplificateurs de mesure (3) par des lignes (6) de signaux de mesure, **caractérisé par le fait que** chaque amplificateur de mesure (3) est connecté à l'unité (2) d'analyse de données de mesure par une ligne d'interrogation (7) et l'unité (2) d'analyse de données de mesure est conçue pour envoyer un signal d'interrogation aux amplificateurs de mesure (3) et **par le fait que** les amplificateurs de mesure (3) sont conçus pour envoyer un signal de réponse par les lignes (6) de signaux de mesure lorsqu'ils reçoivent le signal d'interrogation.

6. Dispositif selon la revendication 5, **caractérisé par le fait que** la ligne (6) de signaux de mesure est prévue en même temps comme ligne d'interrogation (7).
